(19) Europäisches Patentamt / European Patent Office / Office européen des brevets

(11) EP 4 794 378 A1

(12) **EUROPEAN PATENT APPLICATION**
published in accordance with Art. 153(4) EPC

(43) Date of publication:
**19.08.2026 Bulletin 2026/34**

(21) Application number: **24877107.3**

(22) Date of filing: **03.10.2024**

(51) International Patent Classification (IPC):
***H04W 24/10** (2009.01)* ***H04W 36/18** (2009.01)*
***H04W 72/23** (2023.01)*

(52) Cooperative Patent Classification (CPC):
**H04W 24/10; H04W 36/18; H04W 72/23**

(86) International application number:
**PCT/JP2024/035523**

(87) International publication number:
**WO 2025/079511 (17.04.2025 Gazette 2025/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.10.2023 JP 2023174978**

(71) Applicant: **NTT DOCOMO, INC.**
**Tokyo 100-6150 (JP)**

(72) Inventors:
- **MATSUMURA, Yuki**
  **Tokyo 100-6150 (JP)**
- **OKUMURA, Mamoru**
  **Tokyo 100-6150 (JP)**
- **NAGATA, Satoshi**
  **Tokyo 100-6150 (JP)**
- **WANG, Jing**
  **Beijing, 100190 (CN)**
- **CHEN, Lan**
  **Beijing, 100190 (CN)**

(74) Representative: **Hoffmann Eitle**
**Patent- und Rechtsanwälte PartmbB**
**Arabellastraße 30**
**81925 München (DE)**

(54) **TERMINAL, WIRELESS COMMUNICATION METHOD, AND BASE STATION**

(57) A terminal according to one aspect of the present disclosure includes a receiving section that receives information related to a report configuration of first channel state information and information related to a report configuration of second channel state information for L1L2-triggered mobility (LTM), and a control section that determines a priority of a report of the second channel state information, based on at least one of an ID corresponding to the report configuration of the second channel state information and a maximum number of report configurations of the second channel state information.

FIG.8A

| CSI-ReportConfigId | Usage: for legacy |
| --- | --- |
| 1 | Legacy |
| 2 | Legacy |
| … | Legacy |

EP 4 794 378 A1

FIG.8B

| LTM-CSI-ReportConfigId | Usage: for LTM |
| --- | --- |
| 1 | LTM |
| 2 | LTM |
| … | LTM |

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (for example, NR), it is studied that L1L2-triggered mobility (LTM) defined in Rel. 18 is used when a terminal (a user terminal, a User Equipment (UE)) moves between cells. When LTM of Rel. 18 is applied, interruption time of cell switch can be shortened.

When LTM of Rel. 18 is supported, it is assumed that measurement/report of channel state information corresponding to a candidate cell is performed. In this case, how to control the report of channel state information for LTM is not sufficiently studied.

In view of this, the present disclosure has one object to provide a terminal, a radio communication method, and a base station that can appropriately perform a report of channel state information in L1L2-triggered mobility (LTM).

### Solution to Problem

A terminal according to one aspect of the present disclosure includes a receiving section that receives information related to a report configuration of first channel state information and information related to a report configuration of second channel state information for L1L2-triggered mobility (LTM), and a control section that determines a priority of a report of the second channel state information, based on at least one of an ID corresponding to the report configuration of the second channel state information and a maximum number of report configurations of the second channel state information.

### Advantageous Effects of Invention

According to one aspect of the present disclosure, a report of channel state information in L1L2-triggered mobility (LTM) can be appropriately performed.

### Brief Description of Drawings

[FIG. 1] FIG. 1A is a diagram to show an example of mobility of a UE in Rel. 17. FIG. 1B is a diagram to show an example of mobility of the UE in Rel. 18.

[FIG. 2] FIG. 2 is a diagram to show an example of LTM studied in Rel. 18.
[FIG. 3] FIG. 3 is a diagram to show processing between the UE and a base station (gNB) in LTM in Rel. 18.
[FIG. 4] FIG. 4 is a diagram to show processing of early DL synchronization between the UE and the base station (gNB) in LTM in Rel. 18.
[FIG. 5] FIG. 5 is a diagram to show processing of early UL synchronization between the UE and the base station (gNB) in LTM in Rel. 18.
[FIG. 6] FIG. 6 is a diagram to show an example of a CSI report configuration (CSI-ReportConfig) supported in a legacy system (Rel. 17 or earlier versions).
[FIG. 7] FIG. 7 is a diagram to show an example of an LTM CSI report configuration (LTM-CSI-ReportConfig) supported in Rel. 18 or later versions.
[FIG. 8] FIG. 8A and FIG. 8B are diagrams to show examples of a first list for the CSI report configuration (CSI-ReportConfig) and a second list for the LTM CSI report configuration (LTM-CSI-ReportConfig) according to a first embodiment.
[FIG. 9] FIG. 9 is a diagram to show an example of a list for the CSI report configuration (CSI-ReportConfig) and LTM CSI report configuration IDs (LTM-CSI-ReportConfig) according to a second embodiment.
[FIG. 10] FIG. 10A and FIG. 10B are diagrams to show examples of a first list for the CSI report configuration (CSI-ReportConfig) and a second list for the LTM CSI report configuration (LTM-CSI-ReportConfig) according to a third embodiment.
[FIG. 11] FIG. 11 is a diagram to show an example of a schematic structure of a radio communication system according to one embodiment.
[FIG. 12] FIG. 12 is a diagram to show an example of a structure of a base station according to one embodiment.
[FIG. 13] FIG. 13 is a diagram to show an example of a structure of a user terminal according to one embodiment.
[FIG. 14] FIG. 14 is a diagram to show an example of a hardware structure of the base station and the user terminal according to one embodiment.
[FIG. 15] FIG. 15 is a diagram to show an example of a vehicle according to one embodiment.

Description of Embodiments

(Inter-Cell Mobility)

It is studied that the UE performs UL transmission to one or a plurality of cells/TRPs. As a procedure in this case, scenario 1 or scenario 2 below is considered. Note that, in the present disclosure, a serving cell may be interpreted as a TRP in the serving cell. Layer 1/layer 2 (L1/L2) and DCI/Medium Access Control Control Element (MAC CE) may be interchangeably interpreted. In the present disclosure, a physical cell ID (Physical Cell Identity (PCI)) different from the PCI of the current serving cell may be simply referred to as a "different PCI". A non-serving cell, a cell having a different PCI, and an additional cell may be interchangeably interpreted.

<Scenario 1>

Scenario 1 corresponds to, for example, inter-cell mobility for multi-TRP, but may be a scenario not corresponding to inter-cell mobility for multi-TRP.
(1) The UE receives, from the serving cell, a configuration of an SSB for beam measurement of a TRP corresponding to a different PCI from the serving cell and a configuration necessary for using radio resources for data transmission and reception (including resources of the different PCI).
(2) The UE executes beam measurement of the TRP corresponding to the different PCI, and reports beam measurement results to the serving cell.
(3) Based on the above report, the transmission configuration indication (TCI) state associated with the TRP corresponding to the different PCI is activated by L1/L2 signaling from the serving cell.
(4) The UE performs transmission and reception by using a UE-dedicated channel on the TRP corresponding to the different PCI.
(5) The UE needs to invariably cover the serving cell, including a case of the multi-TRP. Similarly to a conventional system, the UE needs to use a common channel (a broadcast control channel (BCCH), a paging channel (PCH)) and the like from the serving cell.

In scenario 1, when the UE transmits and receives an additional cell/TRP (a TRP corresponding to a PCI of the additional cell) and a signal, the serving cell (assumption of the serving cell in the UE) is not changed. The UE is configured

with a higher layer parameter related to the PCI of the non-serving cell from the serving cell. Scenario 1 may be applied in Rel. 17, for example.

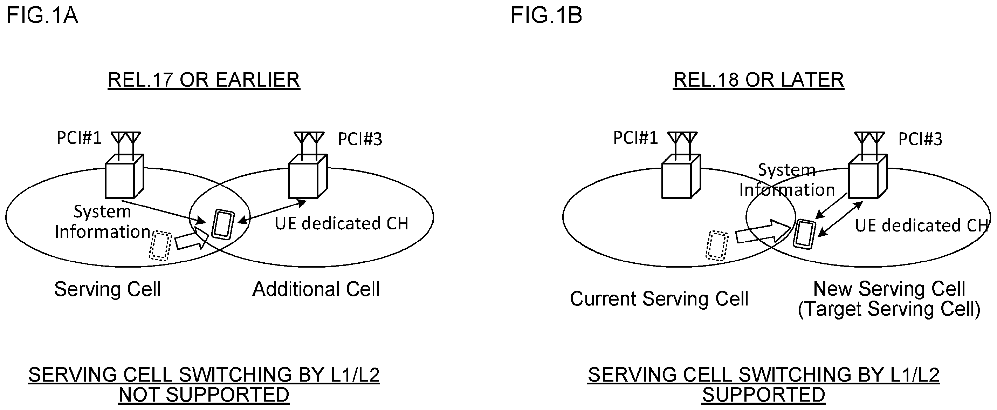

FIG. 1A is a diagram to show an example of movement of the UE in Rel. 17. A case is assumed in which the UE moves from a cell (serving cell) of PCI #1 to a cell (additional cell) (overlapping the serving cell) of PCI #3. In this case, in Rel. 17, switching of the serving cells by L1/L2 is not supported.

The additional cell is a cell having an additional PCI different from the PCI of the serving cell. The UE can receive/transmit a UE-dedicated channel (UE-dedicated CH) from the additional cell. Meanwhile, the UE needs to be present within coverage of the serving cell in order to receive a UE common channel (for example, system information/paging/short message). When the UE moves out of coverage of the serving cell, switching of cells (for example, processing such as RRC reconfiguration) is required through handover (also referred to as L3 mobility) or the like.

<Scenario 2>

In scenario 2, L1/L2 inter-cell mobility (for example, L1L2-triggered mobility (LTM)) is applied. In L1/L2 inter-cell mobility, the serving cell can be changed by using a function such as beam control without performing RRC reconfiguration. In other words, transmission and reception to and from a candidate cell/additional cell can be performed without performing handover. For handover, RRC reconnection is required, which generates a period in which data communication cannot be performed, and thus by applying L1/L2 inter-cell mobility that does not require handover, data communication can be continued even at the time of the serving cell change. Scenario 2 may be applied in Rel. 18, for example. In scenario 2, for example, the following procedure is performed.

(1) The UE receives, from the serving cell (Current serving cell), configuration information (for example, a configuration of an SSB or the like) related to a cell (additional cell/candidate cell/target serving cell) having a different PCI for beam measurement/serving cell change.

(2) The UE executes beam measurement of the cell using the different PCI, and reports measurement results to the serving cell.

(3) The UE may receive a configuration (serving cell/candidate cell configuration) of the cell having the different PCI by higher layer signaling (for example, RRC). In other words, a pre-configuration related to serving cell change may be performed. The configuration may be performed together with or may be performed separately from the configuration in (1).

(4) Based on the above report, the TCI state of the cell having the different PCI may be activated by L1/L2 signaling according to the serving cell change. The TCI state activation and the serving cell change may be separately performed.

(5) The UE changes the serving cell (assumption of the serving cell), and starts reception/transmission by using a pre-configured UE-dedicated channel and the TCI state.

In other words, in scenario 2, the serving cell (assumption of the serving cell in the UE) is updated by L1/L2 signaling. Scenario 2 may be applied in Rel. 18.

FIG. 1B is a diagram to show an example of movement of the UE in Rel. 18. In Rel. 18, the serving cell is switched by L1/L2 (for example, DCI/MAC CE). Here, a case is shown in which PCI #1 corresponding to the current serving cell is switched to PCI #3 corresponding to a candidate cell (for example, a Target serving cell) by L1/L2 signaling.

The UE can receive/transmit a common channel (for example, system information/paging/short message)/UE-dedicated channel to/from a new serving cell (target serving cell #3). Consequently, the UE may go out of coverage of serving cell PCI #1 before being switched.

(L1L2-Triggered Mobility (LTM) in Rel. 18)

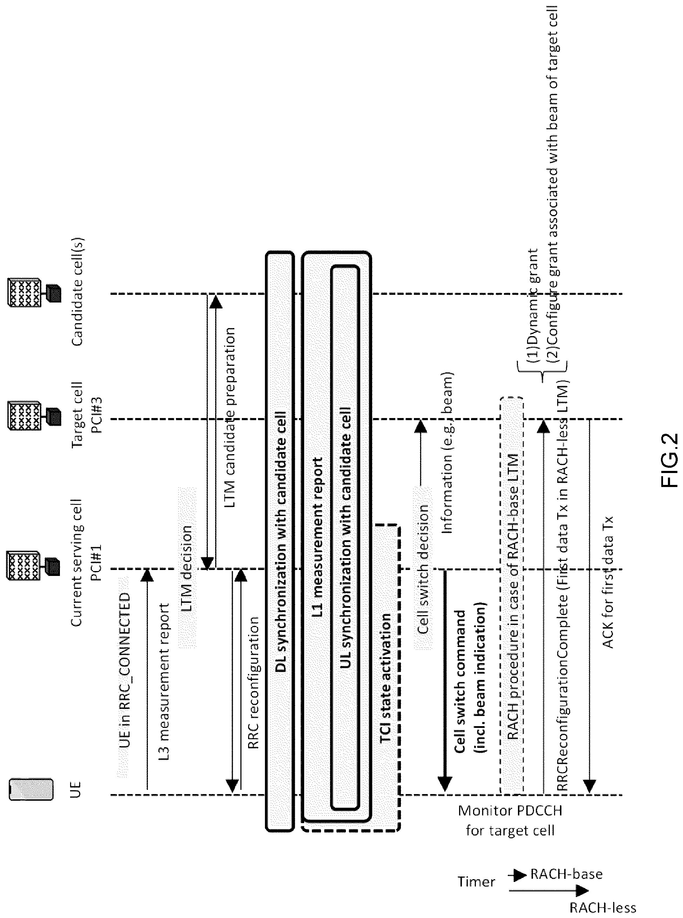

FIG. 2 is a diagram to show an overview of LTM studied in Rel. 18. The UE performs RRC connection with the current serving cell (base station of PCI #1), and transmits an L3 measurement report. The serving cell decides to perform LTM based on the L3 measurement report, and performs LTM preparation together with one or more candidate cells. The UE and the serving cell perform RRC reconfiguration. Note that the one or more candidate cells may include a target cell (base station of PCI #3).

The UE, the serving cell, the target cell, and the candidate cell(s) perform DL synchronization. The UE performs and reports L1 (for example, L1-RSRP/SINR) measurement of the serving cell/candidate cell(s)/target cell. The UE, the serving cell, the target cell, and the candidate cell(s) perform UL synchronization.

The serving cell decides to perform serving cell switch to the target cell (PCI #3) based on the L1 measurement report, and transmits a cell switch command to the UE. After receiving the cell switch command, the UE starts PDCCH

monitoring for the target cell.

In a case of RACH-based LTM, the UE performs a RACH procedure for the target cell. In a case of RACH-less LTM, the UE transmits an RRC reconfiguration complete message and transmits first data to the target cell. The transmission of the first data is performed based on a dynamic grant, or a configured grant associated with a beam of the target cell. The target cell transmits an ACK for the transmission to the UE.

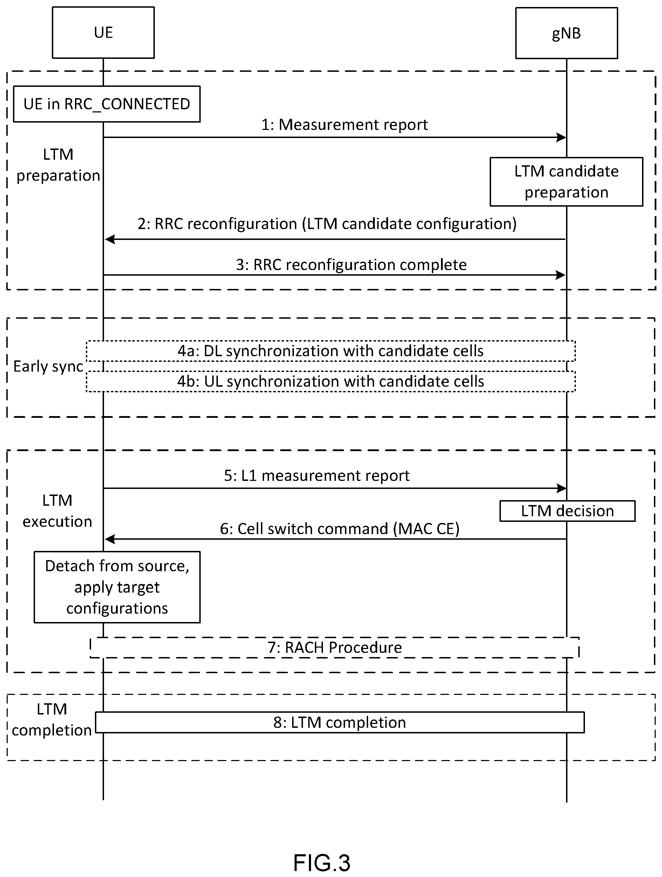

FIG. 3 is a diagram to show processing between the UE and the base station (gNB) in LTM in Rel. 18. The processing of each step of FIG. 3 will be described below in detail.

1: The UE transmits a measurement report message to the gNB. The gNB decides to configure LTM, and starts preparation of one or more candidate cells.
2: The gNB transmits an RRC reconfiguration message including an LTM candidate cell configuration of the one or the plurality of candidate cells to the UE.
3: The UE stores the LTM candidate cell configuration, and transmits an RRC reconfiguration complete message to the gNB.
4a: The UE performs DL synchronization with the one or more candidate cells before receiving a cell switch command. For the DL synchronization for the candidate cell(s) before the cell switch command, performing thereof based at least on an SSB may be supported.
4b: When being requested from the network, the UE performs early TA acquisition with the one or more candidate cells before receiving the cell switch command. This is triggered by a PDCCH order from a source cell via CFRA. Next, the UE transmits a preamble to indicated candidate cells. In order to minimize interruption of data of the source cell to the candidate cells due to Contention Free Random Access (CFRA), the UE does not receive a RAR for the purpose of acquisition of a TA value. The TA value of the candidate cells is indicated in the cell switch command. The UE does not maintain a TA timer for the candidate cells, and guarantees validity of TA, based on implementation of the network.
5: The UE performs L1 measurement configured for the candidate cells, and transmits an L1 measurement report to the gNB. The L1 measurement is performed as long as the RRC reconfiguration of step 2 is applied.
6: The gNB decides to execute cell switch to the target cell, and transmits a MAC CE (cell switch command) for triggering the cell switch. The MAC CE includes candidate configurations of indices of the target cell. The UE switches to the target cell, and applies the configurations indicated by the candidate configuration indices.
7: When the UE does not have valid TA of the target cell, the UE executes a random access procedure for the target cell.
8: The UE transmits an RRC reconfiguration complete message, and thereby completes the LTM cell switch procedure. The UE executes the RA procedure in step 7, and when the random access procedure completes successfully, the UE considers that LTM execution has completed successfully. In RACH-less LTM, when the network determines to have successfully received first UL data, the UE considers that LTM execution has completed successfully. The UE determines the success in reception of the first UL data by receiving a PDCCH indicating a C-RNTI of the UE in the target cell scheduling new transmission next to the first UL data.

Note that the RRC reconfiguration complete message may be invariably transmitted in each LTM execution. Steps 4 to 8 may be performed a plurality of times for subsequent LTM by using the candidate cell configuration provided in step 2.

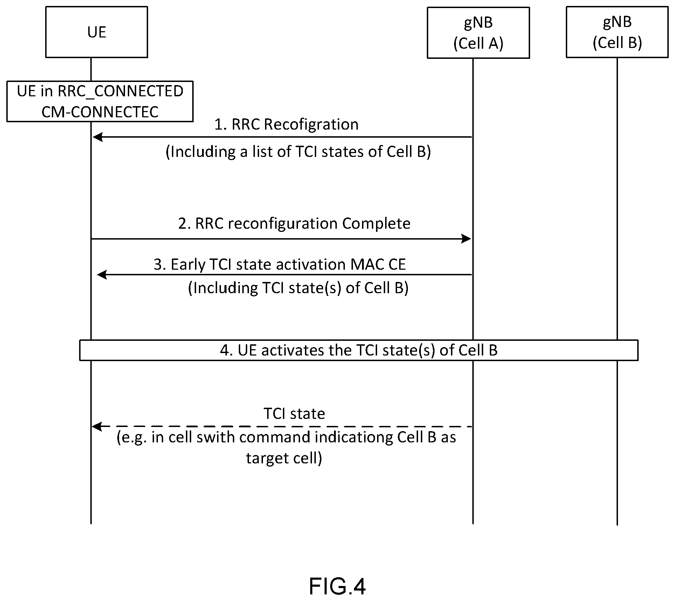

FIG. 4 is a diagram to show processing of early DL synchronization between the UE and the base station (gNB) in LTM in Rel. 18. When being configured by the network, RRC connection (RRC_CONNECTED) of the UE for enabling DL synchronization with a cell different from the current serving cell can be performed. This can be performed by pre-activating TCI states belonging to the cell that requires early DL synchronization. The processing of each step of FIG. 4 will be described below in detail. FIG. 4 shows an early TCI state activation (early DL synchronization) procedure triggered by the network.

1: The gNB to which a cell A belongs provides a list of TCI states of a cell B to the UE in an RRC reconfiguration message. The gNB to which the cell A belongs provides lists of TCI states for one or more cells. The early TCI state activation procedure is executed by the UE for the one or more cells.
2: The UE responds to the gNB with an RRC reconfiguration complete message.
3: The gNB to which the cell A belongs transmits an early TCI state activation MAC CE to start the early TCI state activation procedure of the cell B. The early TCI state activation MAC CE may also indicate the TCI states of other cells during the TCI state activation procedure.
4: The UE activates the TCI states of the cell B indicated in the early TCI state activation MAC CE.

The UE assumes early DL synchronization of the gNB to which the cell B belongs. The gNB to which the cell A belongs may start the cell switch procedure for the cell B by providing a cell switch command indicating the cell B as the target cell.

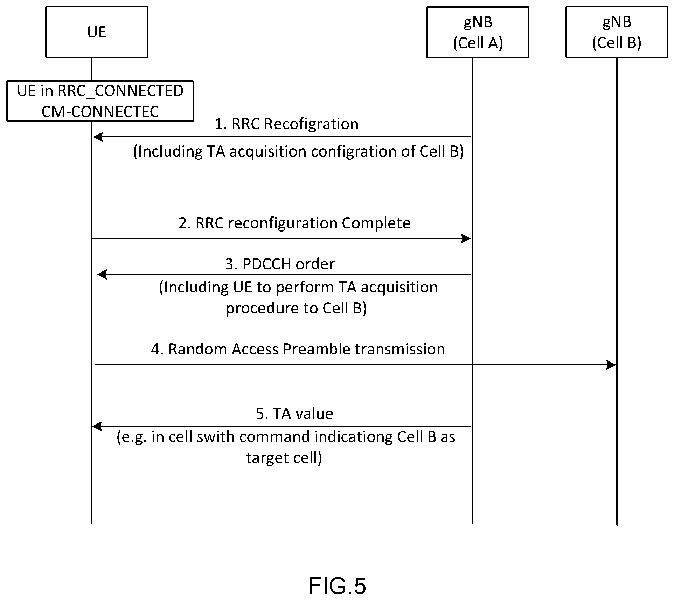

FIG. 5 is a diagram to show processing of early UL synchronization between the UE and the base station (gNB) in LTM in Rel. 18. When being configured by the network, RRC connection (RRC_CONNECTED) of the UE for enabling UL synchronization with a cell different from the current serving cell can be performed. The processing of each step of FIG. 5 will be described below in detail. FIG. 5 shows an early TA acquisition (early UL synchronization) procedure triggered by the network.

1: The gNB to which the cell A belongs provides a TA acquisition configuration to the UE in an RRC reconfiguration message. The TA acquisition configuration includes RRC configuration information necessary for transmitting a random access preamble to the cell B. Then, the gNB to which the cell B belongs calculates a TA value used by the UE. For example, the LTM cell switch procedure is executed for the cell B. The TA acquisition configuration may include information related to one or a plurality of cells for which the TA acquisition procedure executed by the UE is performed.

2: The UE responds to the gNB with an RRC reconfiguration complete message.

3: The gNB to which the cell A belongs transmits a PDCCH order message to start the TA acquisition procedure of the cell B. The PDCCH order includes information necessary for transmitting a random access preamble to the cell B.

4: In order that the gNB to which the cell B belongs calculates the TA value used by the UE, the UE transmits a random access preamble to the cell B (for example, when the LTM cell switch procedure is triggered by the cell B). When the gNB to which the cell A belongs fails to acquire TA, the gNB can instruct retransmission of a preamble for TA acquisition.

5: When the LTM cell switch procedure is triggered for the cell B, the gNB to which the cell A belongs provides the TA value calculated by the gNB to which the cell B belongs to the UE during the TA acquisition procedure in an LTM cell switch command MAC CE for starting the cell switch procedure with the cell B.

(CSI Report)

In NR, the UE measures a channel state by using a specific reference signal (or resources for the reference signal), and feeds back (reports) channel state information (CSI) to the base station.

The UE may measure the channel state by using a channel state information-reference signal (CSI-RS), a synchronization signal/broadcast channel (Synchronization Signal/Physical Broadcast Channel (SS/PBCH)) block, a synchronization signal (SS), a demodulation reference signal (DMRS), or the like.

A CSI-RS resource may include at least one of a non zero power (NZP) CSI-RS and CSI-Interference Management (IM). The SS/PBCH block is a block including a synchronization signal (for example, a primary synchronization signal (PSS), a secondary synchronization signal (SSS)) and a PBCH (and a corresponding DMRS), and may be referred to as an SS block (SSB) or the like. An SSB index may be given to a time position of the SSB in a half frame.

Note that the CSI may include at least one of a channel quality indicator (CQI), a precoding matrix indicator (PMI), a CSI-RS resource indicator (CRI), an SS/PBCH block resource indicator (SS/PBCH Block Indicator (SSBRI)), a layer indicator (LI), a rank indicator (RI), Layer 1 (L1)-Reference Signal Received Power (RSRP) (reference signal received power in Layer 1), L1-Reference Signal Received Quality (RSRQ), an L1-Signal to Interference plus Noise Ratio (SINR), an L1-Signal to Noise Ratio (SNR), and the like.

The CSI may have a plurality of parts. A first part of the CSI (CSI part 1) may include information with a relatively small number of bits (for example, the RI). The second part of the CSI (CSI part 2) may include information (for example, the CQI) having relatively a large number of bits, such as information determined based on CSI part 1.

As a method for feeding back the CSI, (1) periodic CSI (P-CSI) reporting, (2) aperiodic CSI (A (AP)-CSI) reporting, (3) semi-persistent (semi-permanent) CSI reporting (SP-CSI) reporting, and the like are under study.

The UE may be notified of information related to a CSI report (which may be referred to as CSI report configuration information) by using higher layer signaling, physical layer signaling (for example, downlink control information (DCI)), or a combination of these. The CSI report configuration information may be configured by using an RRC information element "CSI-ReportConfig," for example.

The CSI report configuration information may include information related to report periodicity, an offset, or the like, for example, and these may be expressed in certain time units (units of slots, units of subframes, units of symbols, or the like). The CSI report configuration information may include a configuration ID (CSI-ReportConfigId). The configuration ID may specify parameters such as a type of CSI reporting method (whether or not the SP-CSI is used or the like) and report periodicity. The CSI report configuration information may include information (CSI-ResourceConfigId) indicating which signal (or which signal resource) measured CSI is to be reported with.

(CSI Report Configuration)

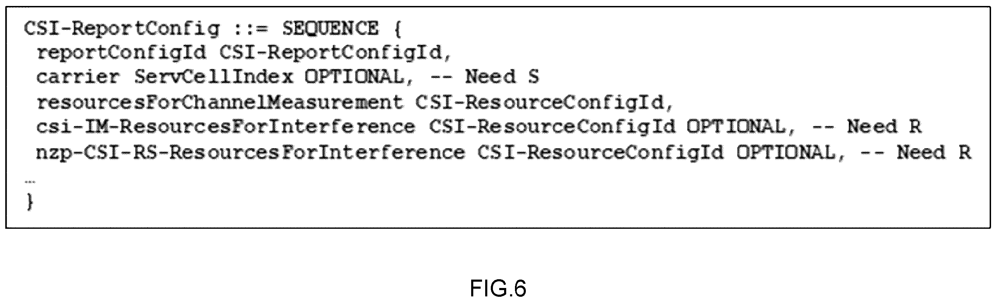

FIG. 6 is a diagram to show an overview of an RRC CSI report configuration. FIG. 6 shows an RRC CSI report configuration (CSI-ReportConfig) of 3GPP Rel. 17. As shown in FIG. 6, the CSI report configuration (CSI-ReportConfig) may include a report configuration ID (reportConfigId CSI-ReportConfigID), a carrier serving cell index (carrier ServCellIndex), resources for channel measurement (resourcesForChannelMeasurement CSI-ResourceConfigId), CSI-IM resources for interference measurement (csi-IM-ResourcesForInterference CSI-ResourceConfigId), non zero power CSI-RS resources for interference measurement (nzp-CSI-RS-ResourcesForInterference CSI-ResourceConfigId), and the like.

"reportConfigId" may correspond to a CSI report configuration ID (CSI-ReportConfigID), and "resourcesForChannelMeasurement", "csi-IM-resourcesForInterference", and "nzp-CSI-RS-resourcesForInterference" may correspond to CSI resource configuration IDs (CSI-ResourceConfigId).

In legacy systems (for example, Rel. 17 or earlier versions), the CSI report configuration ID (CSI-ReportConfigId) is used for the CSI report configuration (CSI-ReportConfig), and is used for priority decision of CSI.

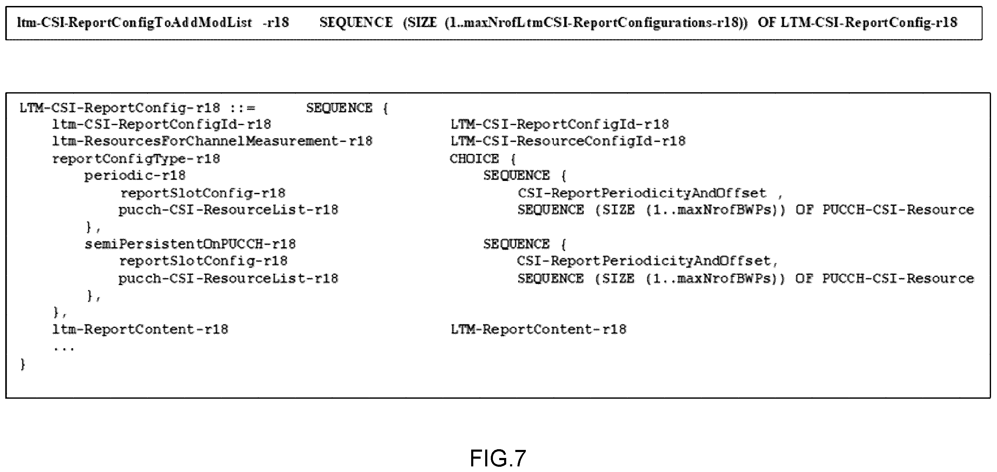

FIG. 7 is a diagram to show an overview of an RRC CSI report configuration for LTM (for example, LTM-CSI-ReportConfig) supported in Rel. 18 or later versions. The CSI report configuration of LTM (for example, LTM-CSI-ReportConfig-r18) may include an LTM CSI report configuration ID (ltm-CSI-ReportConfigId-r18), LTM resources for channel measurement (ltm-ResourcesForChannelMeasurement-r18), a report configuration type (reportConfigType-r18), and the like.

A newly supported LTM-CSI report configuration ID (LTM-CSI-ReportConfigId) is used for an R18 LTM CSI report configuration (for example, LTM-CSI-ReportConfig-r18). The maximum number of R18 LTM CSI report configurations (for example, LTM-CSI-ReportConfig-r18) is maxNrofLtmCSI-ReportConfigurations-r18.

(Priority of CSI Report)

In legacy systems (for example, Rel-15/16 NR), the CSI report (which may be referred to as CSI feedback or the like) may be associated with a priority value. For example, the priority value may be defined using a function $Pri_{iCSI}(y, k, c, s)$. The priority may be interchangeably interpreted as a CSI report priority, a CSI priority, a UCI priority, a CSI/UCI omission rule, or the like.

For example, $Pri_{iCSI}(y, k, c, s)$ may be obtained by the following equation (1).

$$Pri_{iCSI}(y, k, c, s) = 2 \cdot N_{cells} \cdot M_s \cdot y + N_{cells} \cdot M_s \cdot k + M_s \cdot c + s \quad \text{Equation (1)}$$

Here, y may be a value based on a type of the CSI report (an A-CSI report, an SP-CSI report, or a P-CSI report) and a channel for transmitting the CSI report (an uplink shared channel (Physical Uplink Shared Channel (PUSCH)) or an uplink control channel (Physical Uplink Control Channel (PUCCH))).

For example, the following may hold: y = 0 in a case of the A-CSI report transmitted on the PUSCH, y = 1 in a case of the SP-CSI report transmitted on the PUSCH, y = 2 in a case of the SP-CSI report transmitted on the PUCCH, and y = 3 in a case of the P-CSI report transmitted on the PUCCH.

k may be a value based on whether or not the CSI report includes L1-RSRP/SINR (for example, k = 0 when the CSI report includes L1-RSRP/SINR, and k = 1 when the CSI report does not include L1-RSRP/SINR).

c may be a serving cell index. $N_{cells}$ may be a value of the maximum number of configured serving cells (for example, a value of a higher layer parameter maxNrofServingCells).

s may be a report configuration ID (reportConfigID). $M_s$ may be a value of the maximum number of configured CSI report configurations (for example, a value of a higher layer parameter maxNrofCSI-ReportConfigurations).

When a value of $Pri_{iCSI}(y, k, c, s)$ associated with a first CSI report is smaller than a value of $Pri_{iCSI}(y, k, c, s)$ associated with a second CSI report, it may mean that the first CSI report has a priority higher than the second CSI report (or the first CSI report is prioritized over the second CSI report).

In legacy systems, among the parameters of the CSI report configuration, only the report configuration ID (ReportConfigID) and the maximum number of CSI report configurations (maxNrofCSI-ReportConfigurations) are taken into consideration for decision of the priority value of the CSI.

(Analysis)

The CSI report is also configured for LTM supported in Rel. 18, and thus it is assumed that the CSI report is controlled based on the priority of the CSI report. However, how to perform the CSI report in LTM (for example, how to define/configure/apply the priority of the CSI report, how to deal with a priority relationship with the CSI report configuration

of the legacy systems, or the like) presents a problem.

In view of this, the inventors of the present invention studied a CSI report in LTM (for example, handling of a priority of the CSI report), and came up with the idea of one aspect of the present embodiment.

(Various Interpretations and so on)

Embodiments according to the present disclosure will be described in detail with reference to the drawings as follows. The radio communication methods according to the embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, decide (determine), and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, a base station, a gNB, and a network (NW) may be interchangeably interpreted.

In the present disclosure, a cell group, a serving cell group, a master cell group (MCG), and a secondary cell group (SCG) may be interchangeably interpreted. L1/L2, L1/L2 signaling, and DCI/MAC CE may be interchangeably interpreted. A serving cell may be replaced with a cell for transmitting a PDSCH. A candidate cell may mean a candidate cell to be a serving cell in response to L1/L2 inter-cell mobility. L1L2-triggered mobility (LTM) and L1/L2 inter-cell mobility may be interchangeably interpreted.

In the present disclosure, a cell, a PCI, a serving cell, a source serving cell, a source cell, a CC, a BWP, a BWP in a CC, and a band may be interchangeably interpreted. In the present disclosure, a cell, a PCI, a cell of an additional PCI, an additional cell, another cell, a non-serving cell, a cell having a different PCI, a candidate cell, a candidate serving cell, a cell having a PCI different from a PCI of a current serving cell, another serving cell, and a target cell may be interchangeably interpreted. A target cell may be a cell selected from among a plurality of candidate cells. In the present disclosure, switching, change, and update may be interchangeably interpreted. A serving cell may be interpreted as a serving cell before switching or a serving cell after switching.

In the present disclosure, a potential cell switch command and a request/indication of a potential cell switch command may be interchangeably interpreted. A cell switch command in the present disclosure may be transmitted from the NW to the UE by L1/L2 (DCI/MAC CE).

(Radio Communication Method)

<First Embodiment>

A first embodiment relates to an example of a configuration of a list of CSI reports and priorities of the CSI reports in LTM.

In the LTM CSI report configuration (LTM-CSI-ReportConfig), a new list of LTM CSI report configuration IDs may be applied/defined/configured. In the present disclosure, an LTM CSI report configuration (LTM-CSI-ReportConfig) may be interpreted as a CSI report configuration for LTM (CSI-ReportConfig for LTM).

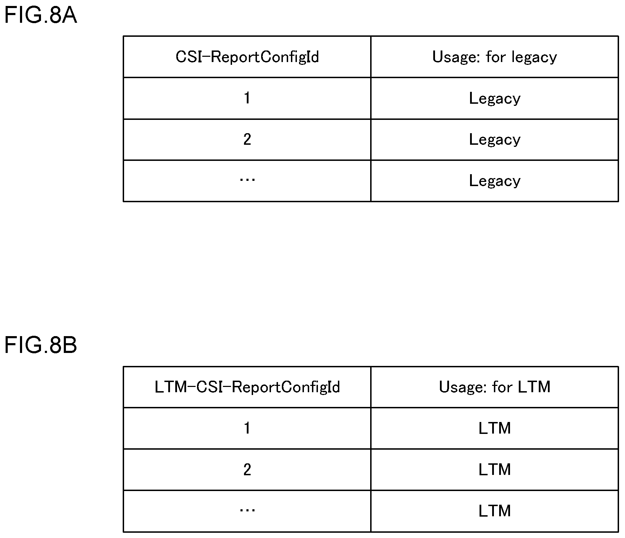

For example, in the LTM CSI report configuration, separately from the CSI report configuration IDs (CSI-ReportConfigId) supported in legacy systems (for example, Rel. 17 or earlier versions), a new list for the LTM CSI report configuration IDs (LTM-CSI-ReportConfigID) may be used (see FIGS. 8A and 8B).

FIG. 8A shows a first list for the (non-LTM) CSI report configuration IDs supported by legacy systems, and FIG. 8B shows a second list for the LTM CSI report configuration IDs (LTM-CSI-ReportConfigID). The lists may each have IDs starting from 1 (or 0).

The maximum number of LTM CSI report configurations (maxNrofLtmCSI-ReportConfigurations) may be decided according to a UE capability. The maximum number of LTM CSI report configurations may be applied only to LTM. For example, the maximum number of CSI report configurations corresponding to the first list and the maximum number of CSI report configurations corresponding to the second list may be separately defined/configured. Consequently, even when the CSI report in LTM is supported, the CSI report can be flexibly performed.

When the list for the LTM CSI report configuration IDs is newly (separately) configured, the priority of the CSI for LTM may be decided based on a certain rule/method (for example, a decision method different from a decision method for the priority of the CSI report of legacy systems). For example, as the CSI priority decision for the LTM CSI report configuration, at least one of the following option 1-1 to option 1-2 may be applied.

{Option 1-1}

In consideration of at least one of the LTM CSI report configuration ID (LTM-CSI-ReportConfigId) and the maximum number of LTM CSI report configurations, the CSI priority for the LTM CSI report configuration may be decided.

In the CSI report configuration for LTM, new factors/parameters may be added to the equation (for example, equation (1) above) for the CSI priority value of legacy systems. The new factors/parameters may be factors/parameters related to at least one of the LTM CSI report configuration ID (LTM-CSI-ReportConfigId) and the maximum number of LTM CSI report configurations.

The new factors/parameters may be added at any level/position in the equation (for example, equation (1) above) used for decision of the legacy CSI priority value. As an example, at least one of the following equation (1A) to equation (1D) may be applied.

$$Pri_{iCSI}(y, k, c, s, p) = 2 \cdot N_{cells} \cdot M_s \cdot K_p \cdot y + N_{cells} \cdot M_s \cdot K_p \cdot k + M_s \cdot K_p \cdot c + K_p \cdot s + p \quad \text{Equation (1A)}$$

Here, p may be the LTM CSI report configuration ID (LTM-CSI-ReportConfigId). $K_p$ may be a value of the higher layer parameter related to the maximum number of LTM CSI report configurations (for example, maxNrofLtmCSI-ReportConfigurations). Other factors/parameters may be similar to those of equation (1).

In equation (1A), in order to decide a value of priority order of the CSI, p has lower importance than other factors.

$$Pri_{iCSI}(y, k, c, p, s) = 2 \cdot N_{cells} \cdot M_s \cdot K_p \cdot y + N_{cells} \cdot M_s \cdot K_p \cdot k + M_s \cdot K_p \cdot c + M_s \cdot p + s \quad \text{Equation (1B)}$$

Here, p may be the LTM CSI report configuration ID (LTM-CSI-ReportConfigId). $K_p$ may be a value of the higher layer parameter related to the maximum number of LTM CSI report configurations (for example, maxNrofLtmCSI-ReportConfigurations). Other factors/parameters may be similar to those of equation (1).

$$Pri_{iCSI}(y, p, k, c, s) = 2 \cdot N_{cells} \cdot M_s \cdot K_p \cdot y + 2 \cdot N_{cells} \cdot M_s \cdot p + N_{cells} \cdot M_s \cdot k + M_s \cdot c + s \quad \text{Equation (1C)}$$

Here, p may be the LTM CSI report configuration ID (LTM-CSI-ReportConfigId). $K_p$ may be a value of the higher layer parameter related to the maximum number of LTM CSI report configurations (for example, maxNrofLtmCSI-ReportConfigurations). Other factors/parameters may be similar to those of equation (1).

$$Pri_{iCSI}(p, y, k, c, s) = 8 \cdot N_{cells} \cdot M_s \cdot p + 2 \cdot N_{cells} \cdot M_s \cdot y + 2 \cdot N_{cells} \cdot M_s + N_{cells} \cdot M_s \cdot k + M_s \cdot c + s \qquad \text{Equation (1D)}$$

Here, p may be the LTM CSI report configuration ID (LTM-CSI-ReportConfigId). Other factors/parameters may be similar to those of equation (1).

In equation (1D), in order to decide a value of priority order of the CSI, p has higher importance than other factors.

Note that equation (1A) to equation (1D) are examples, and applicable factors/parameters, positions of the factors/parameters, and the like are not limited to these. For example, in equation (1A) to equation (1D), at least one of s and $M_s$ may be removed, or may be regarded as 1. In a case in which only an L1-RSRP report is supported in the LTM CSI report, k may be regarded as 0 for the LTM CSI report.

<<Variations>>

"s" in equation (1) and equation (1A) to equation (1D) may be enhanced to cover both of the CSI report configuration ID (CSI-ReportConfigId) supported by legacy systems and the LTM CSI report configuration ID (LTM-CSI-ReportConfigId). For example, the order of the IDs for "s" may be defined/configured in advance.

For example, s may be the LTM CSI report configuration ID (LTM-CSI-ReportConfigId), or the sum of the report configuration ID and the maximum number of LTM CSI report configurations (for example, reportConfigID + maxNrofLtmCSI-ReportConfigrations), and $M_s$ may be a total value of the maximum number of CSI report configurations (maxNrofCSI-ReportConfigurations) and the maximum number of LTM CSI report configurations (maxNrofLtmCSI-ReportConfigrations) (Alt. 1-1).

s may be the report configuration ID (reportConfigID), or the sum of the LTM CSI report configuration ID and the maximum number of CSI report configurations (for example, LTM-CSI-ReportConfigId + maxNrofCSI-ReportConfigrations), and $M_s$ may be a total value of the maximum number of CSI report configurations (maxNrofCSI-ReportConfigurations) and the maximum number of LTM CSI report configurations (maxNrofLtmCSI-ReportConfigrations) (Alt. 1-2).

{Option 1-2}

The priority decision rule for the CSI (for example, equation (1)) supported in legacy systems may be applied separately within the CSI report configuration (CSI-ReportConfig) supported by legacy systems and within the LTM CSI report configuration (LTM-CSI-ReportConfig).

When equation (1) is applied to each of the CSI report configuration (CSI-ReportConfig) and the LTM CSI report configuration (LTM-CSI-ReportCOnfig), definitions/contents of s and $M_s$ may be added (or changed).

For example, s may be the report configuration ID (reportConfigID). $M_s$ may be a value of the maximum number of configured CSI report configurations (for example, a value of the higher layer parameter maxNrofCSI-ReportConfigurations). When an LTM configuration (for example, LTM-Config) is provided/configured, s may be the LTM CSI report configuration ID (LTM-CSI-ReportConfigId). $M_s$ may be a value of the maximum number of configured LTM CSI report configurations (for example, a value of the higher layer parameter maxNrofLtmCSI-ReportConfigurations).

When equation (1) is applied to each of the CSI report configuration (CSI-ReportConfig) and the LTM CSI report configuration (LTM-CSI-ReportConfig), an additional rule may be defined/applied in order to decide the priorities of the CSI report configuration (CSI-ReportConfig) and the LTM CSI report configuration (LTM-CSI-ReportConfig).

Owing to the additional rule, an overlap of the priority values (for example, calculated priority values) between the CSI report configuration (CSI-ReportConfig) and the LTM CSI report configuration (LTM-CSI-ReportConfig) can be avoided.

As the additional rule, at least one of the following case A to case C may be applied.

<<Case A>>

When the value of the priority ($Pri_{iCSI}(y, k, c, s)$) calculated for the LTM CSI report configuration (LTM-CSI-ReportConfig) is smaller than the value of the priority calculated for the legacy CSI report configuration (CSI-ReportConfig), at least one of the following option A-1 and option A-2 may be applied.

- Option A-1

The CSI report for the LTM CSI report configuration (LTM-CSI-ReportConfig) has a higher priority than the CSI report for the legacy CSI report configuration (CSI-ReportConfig).

- Option A-2

The CSI report for the legacy CSI report configuration (CSI-ReportConfig) has a higher priority than the CSI report for the LTM CSI report configuration (LTM-CSI-ReportConfig).

<<Case B>>

When the value of the priority ($Pri_{iCSI}$(y, k, c, s)) calculated for the LTM CSI report configuration (LTM-CSI-ReportConfig) is larger than the value of the priority calculated for the legacy CSI report configuration (CSI-ReportConfig), at least one of the following option B-1 and option B-2 may be applied.

- Option B-1

The CSI report for the LTM CSI report configuration (LTM-CSI-ReportConfig) has a higher priority than the CSI report for the legacy CSI report configuration (CSI-ReportConfig).

- Option B-2

The CSI report for the legacy CSI report configuration (CSI-ReportConfig) has a higher priority than the CSI report for the LTM CSI report configuration (LTM-CSI-ReportConfig).

<<Case C>>

When the value of the priority ($Pri_{iCSI}$(y, k, c, s)) calculated for the LTM CSI report configuration (LTM-CSI-ReportConfig) is equal to the value of the priority calculated for the legacy CSI report configuration (CSI-ReportConfig), at least one of the following option C-1 and option C-2 may be applied.

- Option C-1

The CSI report for the LTM CSI report configuration (LTM-CSI-ReportConfig) has a higher priority than the CSI report for the legacy CSI report configuration (CSI-ReportConfig).

- Option C-2

The CSI report for the legacy CSI report configuration (CSI-ReportConfig) has a higher priority than the CSI report for the LTM CSI report configuration (LTM-CSI-ReportConfig).

In case A to case C, option B-1 and option C-1 invariably correspond to cases in which the LTM CSI report configuration (LTM-CSI-ReportConfig) is prioritized. Option A-2 and option C-2 invariably correspond to cases in which the legacy CSI report configuration (CSI-ReportConfig) is prioritized.

The options in each case may be freely combined as appropriate to be applied.

<Second Embodiment>

A second embodiment relates to another example of a configuration of a list of CSI reports and priorities of the CSI reports in LTM.

In the LTM CSI report configuration (LTM-CSI-ReportConfig), for an RRC configuration, a legacy information element (legacy IE) of the CSI report configuration (CSI-ReportConfig) may be used. In this case, the CSI report configuration ID (CSI-ReportConfigID) may be used for the LTM CSI report configuration (LTM-CSI-ReportConfig).

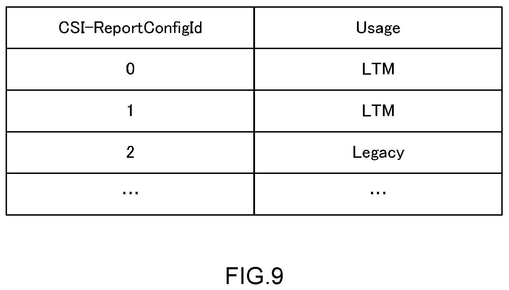

The CSI report configuration for LTM (CSI-ReportConfig for LTM) and the legacy CSI report configuration (CSI-ReportConfig) may share a single/common list of CSI report configuration IDs (CSI-ReportConfigId) (see FIG. 9).

FIG. 9 shows an example of a list including the (non-LTM) CSI report configuration supported by legacy systems and the CSI report configuration for LTM (CSI-ReportConfig for LTM). The type (Usage) of CSI corresponding to each ID may be implicitly decided by a configuration in the CSI report configuration (CSI-ReportConfig), or may be configured based on a certain rule.

For example, at the beginning, one of the CSI report configurations (in FIG. 9, LTM) may be consecutively included at the beginning, or each of the CSI report configurations may be non-consecutively included.

The maximum number of CSI report configurations (maxNrofCSI-ReportConfigrations) may include both the numbers of legacy CSI reports and LTM CSI reports. In this case, for the maximum number of CSI report configurations

(maxNrofCSI-ReportConfigrations), a value larger than the maximum number of legacy CSI report configurations (maxNrofCSI-ReportConfigrations) may be supported. The maximum number of CSI report configurations (maxNrofCSI-ReportConfigrations) may be decided based on a UE capability (for example, a UE capability supporting inclusion of both the legacy CSI reports and the LTM CSI reports).

When the CSI report configuration for LTM (CSI-ReportConfig for LTM) and the legacy CSI report configuration (CSI-ReportConfig) are included in a common list, the priority of the CSI report for LTM (CSI-ReportConfig for LTM) may be decided based on at least one of the following option 2-1 to option 2-2.

{Option 2-1}

The priority of the CSI report for LTM (CSI-ReportConfig for LTM) may be decided based on the priority decision rule for the CSI (for example, equation (1) above) supported in legacy systems.

In this case, in equation (1), s corresponds to the report configuration ID (reportConfigID), and $M_s$ corresponds to a value of the higher layer parameter maxNrofCSI-ReportConfigurations, or a value of maxNrofCSI-ReportConfigurations-r18 when the LTM configuration (LTM-Config) is provided.

{Option 2-2}

The priority of the CSI report for LTM (CSI-ReportConfig for LTM) may be decided based on the priority decision rule for the CSI described in the first embodiment (for example, the priority decision rule for the CSI described in at least one of option 1-1 and option 1-2).

<Third Embodiment>

A third embodiment relates to another example of a configuration of a list of CSI reports and priorities of the CSI reports in LTM.

In the LTM CSI report configuration (LTM-CSI-ReportConfig), a new list of LTM CSI report configuration IDs may be applied/defined/configured. For example, in the LTM CSI report configuration, separately from the CSI report configuration IDs (CSI-ReportConfigId) supported in legacy systems (for example, Rel. 17 or earlier versions), a new list for the LTM CSI report configuration IDs (LTM-CSI-ReportConfigID) may be used.

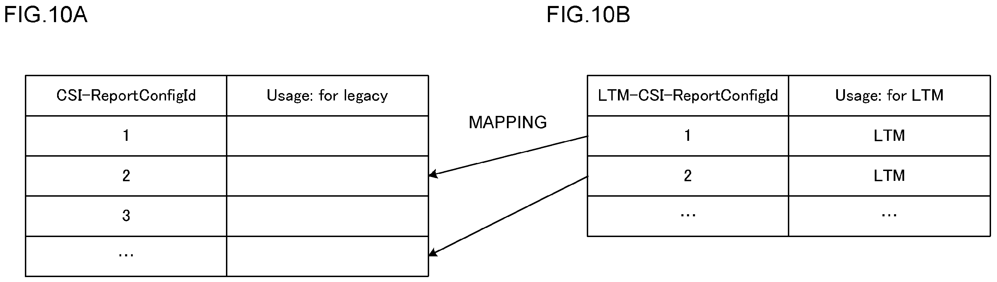

Note that each LTM CSI report configuration ID (LTM-CSI-ReportConfigId) may be mapped to the CSI report configuration ID (CSI-ReportConfigId). In this case, the CSI report configuration ID (CSI-ReportConfigId) may be reserved for a specific LTM CSI report configuration (LTM-CSI-ReportConfig) (see FIG. 10).

FIG. 10A shows a first list for the (non-LTM) CSI report configuration IDs supported by legacy systems, and FIG. 10B shows a second list for the LTM CSI report configuration IDs (LTM-CSI-ReportConfigID). The lists may each have IDs starting from 1 (or 0).

Furthermore, each LTM CSI report configuration ID (LTM-CSI-ReportConfigID) included in the second list may be mapped to/associated with a specific CSI report configuration ID (CSI-ReportConfigId) of the first list for the CSI report configuration IDs. FIGS. 10A and 10B show cases in which LTM CSI report configuration ID (LTM-CSI-ReportConfigID) #1 is associated with CSI report configuration ID (CSI-ReportConfigId) #2 and LTM CSI report configuration ID (LTM-CSI-ReportConfigID) #2 is associated with CSI report configuration ID (CSI-ReportConfigId) #4.

A mapping relationship/mapping rule between the CSI report configuration ID (CSI-ReportConfigId) and the LTE CSI report configuration ID (LTM-CSI-ReportConfig) may be defined in advance, or may be provided/configured for the UE by an RRC parameter. For example, the LTM CSI report configuration (LTM-CSI-ReportConsig) may be mapped in order from 1 of the CSI report configuration ID (CSI-ReportCOnfigId). Alternatively, the LTM CSI report configuration (LTM-CSI-ReportConsig) may be mapped to an ID larger than the maximum number of CSI report configurations (for example, LTM is mapped to CSI-ReportConfigId = maxNrofCSI-ReportConfigurations + 1, CSI-ReportConfigId = maxNrofCSI-ReportConfigurations + 2, and so on).

The maximum number of CSI report configurations (maxNrofCSI-ReportConfigrations) may include both the numbers of legacy CSI reports and LTM CSI reports. In this case, for the maximum number of CSI report configurations (maxNrofCSI-ReportConfigrations), a value larger than the maximum number of legacy CSI report configurations (maxNrofCSI-ReportConfigrations) may be supported. The maximum number of CSI report configurations (maxNrofCSI-ReportConfigrations) may be decided based on a UE capability (for example, a UE capability supporting inclusion of both the legacy CSI reports and the LTM CSI reports).

When the CSI report configuration for LTM (CSI-ReportConfig for LTM) is mapped to/associated with a list of legacy CSI report configuration IDs (CSI-ReportConfigId), the priority of the CSI report for LTM (CSI-ReportConfig for LTM) may be decided based on at least one of the following option 3-1 to option 3-2.

{Option 3-1}

The priority of the CSI report for LTM (CSI-ReportConfig for LTM) may be decided based on the priority decision rule for the CSI (for example, equation (1) above) supported in legacy systems.
In this case, in equation (1), s corresponds to the report configuration ID (reportConfigID), and $M_s$ corresponds to a value of the higher layer parameter maxNrofCSI-ReportConfigurations, or a value of maxNrofCSI-ReportConfigurations-r18 when the LTM configuration (LTM-Config) is provided.

{Option 3-2}

The priority of the CSI report for LTM (CSI-ReportConfig for LTM) may be decided based on the priority decision rule for the CSI described in the first embodiment (for example, the priority decision rule for the CSI described in at least one of option 1-1 and option 1-2).

<Supplements>

{Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.
When the notification is performed by a MAC CE, the MAC CE may be identified by a new logical channel ID (LCID) not defined in a legacy standard being included in a MAC subheader.
When the notification is performed by DCI, the notification may be performed by a specific field of the DCI, a radio network temporary identifier (RNTI) used for scrambling of cyclic redundancy check (CRC) bits given to the DCI, a format of the DCI, or the like.
Notification of any information to a UE in the above-described embodiments may be performed periodically, semi-persistently, or aperiodically.

{Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.
When the notification is performed by a MAC CE, the MAC CE may be identified by a new LCID not defined in legacy standards being included in a MAC subheader.
When the notification is performed by UCI, the notification may be transmitted by using a PUCCH or a PUSCH.
Notification of any information from a UE in the above-described embodiments may be performed periodically, semi-persistently, or aperiodically.

{Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.
At least one of the above-described embodiments may be applied only to a UE that has reported a specific UE capability or that supports the specific UE capability. Note that "supporting" and "whether to support" may be interchangeably interpreted.
The specific UE capability may indicate at least one of the following:

- supporting of specific processing/operation/control/information regarding at least one of the embodiments described above

- supporting of a configuration of the LTM CSI report configuration (LTM-CSI-ReportConfig)
- supporting of the use of separate lists for the CSI report configuration (CSI-ReportConfig) and the LTM CSI report configuration (LTM-CSI-ReportConfig)

- supporting of the use of a common list for the CSI report configuration (CSI-ReportConfig) and the LTM CSI report configuration (LTM-CSI-ReportConfig)
- supporting of decision of the priority of the LTM CSI report

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of cell switch by a potential cell switch command, any RRC parameter for a specific release (for example, Rel. 18/19), or the like.

When the UE does not support at least one of the specific UE capabilities above or is not configured with the specific information, operation of Rel. 15/16/17 may be applied, for example.

(Supplementary Notes)

Regarding one embodiment of the present disclosure, the following supplementary notes of the invention will be given.

{Supplementary Note 1}

A terminal including:

a receiving section that receives information related to a report configuration of first channel state information and information related to a report configuration of second channel state information for L1L2-triggered mobility (LTM); and

a control section that determines a priority of a report of the second channel state information, based on at least one of an ID corresponding to the report configuration of the second channel state information and a maximum number of report configurations of the second channel state information.

{Supplementary Note 2}

The terminal according to supplementary note 1, wherein an ID corresponding to the report configuration of the first channel state information and an ID corresponding to the report configuration of the second channel state information are configured in separate lists.

{Supplementary Note 3}

The terminal according to supplementary note 1 or 2, wherein an ID corresponding to the report configuration of the first channel state information and an ID corresponding to the report configuration of the second channel state information are configured in one list.

{Supplementary Note 4}

The terminal according to any one of supplementary notes 1 to 3, wherein an ID corresponding to the report configuration of the first channel state information and an ID corresponding to the report configuration of the second channel state information are configured in separate lists, and the ID corresponding to the report configuration of the second channel state information is associated with a specific ID included in a list for the report configuration of the first channel state information.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

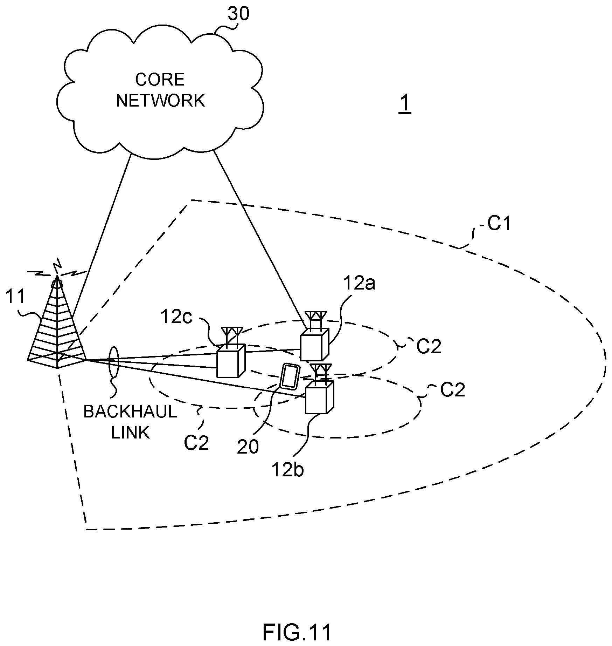

FIG. 11 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and the like.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

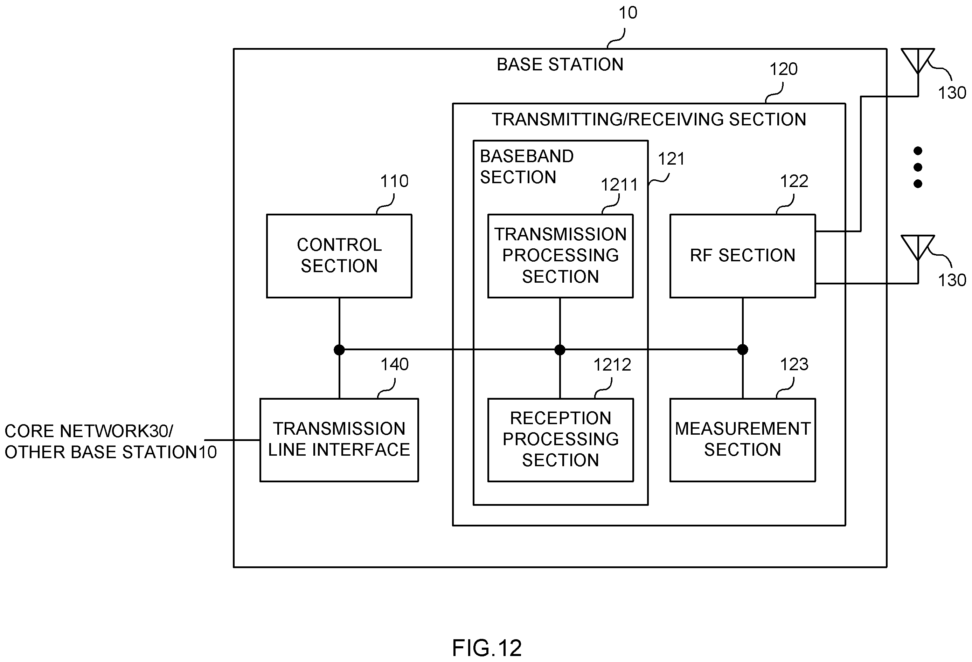

FIG. 12 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio

resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam or a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit information related to a report configuration of first channel state information and information related to a report configuration of second channel state information for L1L2-triggered mobility (LTM).

The control section 110 may indicate a priority of a report of the second channel state information, based on at least one of an ID corresponding to the report configuration of the second channel state information and a maximum number of report configurations of the second channel state information.

(User Terminal)

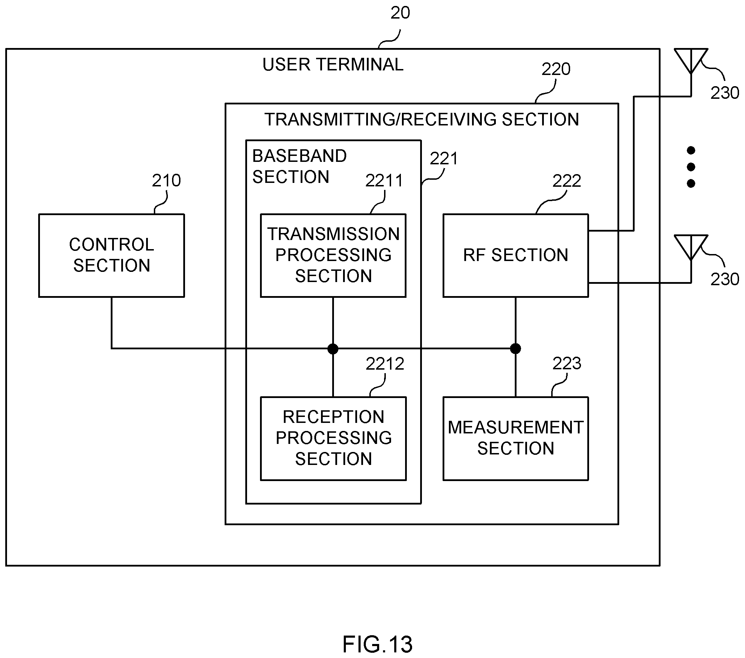

FIG. 13 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam or a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a

received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive information related to a report configuration of first channel state information and information related to a report configuration of second channel state information for L1L2-triggered mobility (LTM).

The control section 210 may determine a priority of a report of the second channel state information, based on at least one of an ID corresponding to the report configuration of the second channel state information and a maximum number of report configurations of the second channel state information.

An ID corresponding to the report configuration of the first channel state information and an ID corresponding to the report configuration of the second channel state information may be configured in separate lists.

An ID corresponding to the report configuration of the first channel state information and an ID corresponding to the report configuration of the second channel state information may be configured in one list.

An ID corresponding to the report configuration of the first channel state information and an ID corresponding to the report configuration of the second channel state information may be configured in separate lists, and the ID corresponding to the report configuration of the second channel state information may be associated with a specific ID included in a list for the report configuration of the first channel state information.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

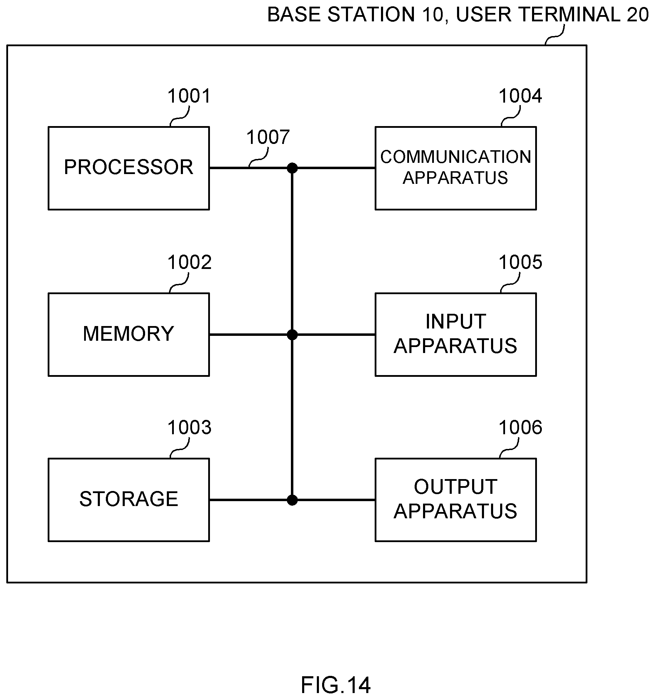

For example, a base station, a user terminal, and so on according to one embodiment of the present disclosure may function as a computer that executes the processes of the radio communication method of the present disclosure. FIG. 14 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the

processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

(Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a

symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are

merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The

spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

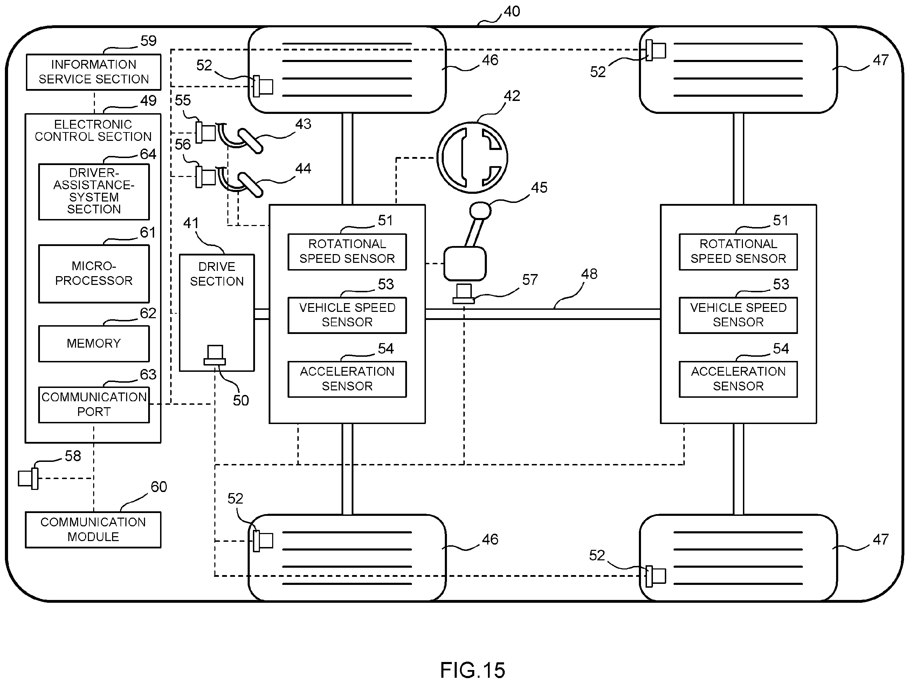

FIG. 15 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, intervehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..."

("..." may be expressed using, for example, a that-clause, a toinfinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and noninclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

This application is based on and claims priority to Japanese Patent Application No. 2023-174978, filed on October 10, 2023, the contents of which are incorporated herein by reference in their entirety.

## Claims

**1.** A terminal comprising:

a receiving section that receives information related to a report configuration of first channel state information and information related to a report configuration of second channel state information for L1L2-triggered mobility

(LTM); and
a control section that determines a priority of a report of the second channel state information, based on at least one of an ID corresponding to the report configuration of the second channel state information and a maximum number of report configurations of the second channel state information.

2. The terminal according to claim 1, wherein
an ID corresponding to the report configuration of the first channel state information and an ID corresponding to the report configuration of the second channel state information are configured in separate lists.

3. The terminal according to claim 1, wherein
an ID corresponding to the report configuration of the first channel state information and an ID corresponding to the report configuration of the second channel state information are configured in one list.

4. The terminal according to claim 1, wherein
an ID corresponding to the report configuration of the first channel state information and an ID corresponding to the report configuration of the second channel state information are configured in separate lists, and the ID corresponding to the report configuration of the second channel state information is associated with a specific ID included in a list for the report configuration of the first channel state information.

5. A radio communication method for a terminal, the radio communication method comprising:

receiving information related to a report configuration of first channel state information and information related to a report configuration of second channel state information for L1L2-triggered mobility (LTM); and
determining a priority of a report of the second channel state information, based on at least one of an ID corresponding to the report configuration of the second channel state information and a maximum number of report configurations of the second channel state information.

6. A base station comprising:

a transmitting section that transmits information related to a report configuration of first channel state information and information related to a report configuration of second channel state information for L1L2-triggered mobility (LTM); and
a control section that indicates a priority of a report of the second channel state information, based on at least one of an ID corresponding to the report configuration of the second channel state information and a maximum number of report configurations of the second channel state information.

FIG.1A

REL.17 OR EARLIER

PCI#1

PCI#3

System Information

UE dedicated CH

Serving Cell

Additional Cell

SERVING CELL SWITCHING BY L1/L2 NOT SUPPORTED

FIG.1B

REL.18 OR LATER

PCI#1

PCI#3

System Information

UE dedicated CH

Current Serving Cell

New Serving Cell (Target Serving Cell)

SERVING CELL SWITCHING BY L1/L2 SUPPORTED

UE
Current serving cell
PCI#1
Target cell
PCI#3
Candidate cell(s)
UE in RRC_CONNECTED
L3 measurement report
LTM decision
LTM candidate preparation
RRC reconfiguration
DL synchronization with candidate cell
L1 measurement report
UL synchronization with candidate cell
TCI state activation
Cell switch decision
Information (e.g., beam)
Cell switch command
(incl. beam indication)
RACH procedure in case of RACH-base LTM
RRCReconfigurationComplete (First data Tx in RACH-less LTM)
(1)Dynamic grant
(2)Configure grant associated with beam of target cell
ACK for first data Tx
Monitor PDCCH
for target cell
Timer
RACH-base
RACH-less

FIG.2

UE
gNB
UE in RRC_CONNECTED
1: Measurement report
LTM preparation
LTM candidate preparation
2: RRC reconfiguration (LTM candidate configuration)
3: RRC reconfiguration complete
Early sync
4a: DL synchronization with candidate cells
4b: UL synchronization with candidate cells
5: L1 measurement report
LTM execution
LTM decision
6: Cell switch command (MAC CE)
Detach from source, apply target configurations
7: RACH Procedure
LTM completion
8: LTM completion

FIG.3

UE
gNB
(Cell A)
gNB
(Cell B)
UE in RRC_CONNECTED
CM-CONNECTEC
1. RRC Recofigration
(Including a list of TCI states of Cell B)
2. RRC reconfiguration Complete
3. Early TCI state activation MAC CE
(Including TCI state(s) of Cell B)
4. UE activates the TCI state(s) of Cell B
TCI state
(e.g. in cell swith command indicationg Cell B as
target cell)

FIG.4

UE
gNB
(Cell A)
gNB
(Cell B)
UE in RRC_CONNECTED
CM-CONNECTEC
1. RRC Recofigration
(Including TA acquisition configration of Cell B)
2. RRC reconfiguration Complete
3. PDCCH order
(Including UE to perform TA acquisition
procedure to Cell B)
4. Random Access Preamble transmission
5. TA value
(e.g. in cell swith command indicationg Cell B as
target cell)

FIG.5

```
CSI-ReportConfig ::= SEQUENCE {
 reportConfigId CSI-ReportConfigId,
 carrier ServCellIndex OPTIONAL, -- Need S
 resourcesForChannelMeasurement CSI-ResourceConfigId,
 csi-IM-ResourcesForInterference CSI-ResourceConfigId OPTIONAL, -- Need R
 nzp-CSI-RS-ResourcesForInterference CSI-ResourceConfigId OPTIONAL, -- Need R
...
}
```

FIG.6

```
ltm-CSI-ReportConfigToAddModList-r18    SEQUENCE (SIZE (1..maxNrofLtmCSI-ReportConfigurations-r18)) OF LTM-CSI-ReportConfig-r18
```

```
LTM-CSI-ReportConfig-r18 ::=      SEQUENCE {
    ltm-CSI-ReportConfigId-r18                    LTM-CSI-ReportConfigId-r18
    ltm-ResourcesForChannelMeasurement-r18        LTM-CSI-ResourceConfigId-r18
    reportConfigType-r18                          CHOICE {
        periodic-r18                                  SEQUENCE {
            reportSlotConfig-r18                          CSI-ReportPeriodicityAndOffset ,
            pucch-CSI-ResourceList-r18                    SEQUENCE (SIZE (1..maxNrofBWPs)) OF PUCCH-CSI-Resource
        },
        semiPersistentOnPUCCH-r18                     SEQUENCE {
            reportSlotConfig-r18                          CSI-ReportPeriodicityAndOffset,
            pucch-CSI-ResourceList-r18                    SEQUENCE (SIZE (1..maxNrofBWPs)) OF PUCCH-CSI-Resource
        },
    },
    ltm-ReportContent-r18                         LTM-ReportContent-r18
    ...
}
```

FIG.7

FIG.8A

| CSI-ReportConfigId | Usage: for legacy |
|---|---|
| 1 | Legacy |
| 2 | Legacy |
| … | Legacy |

FIG.8B

| LTM-CSI-ReportConfigId | Usage: for LTM |
|---|---|
| 1 | LTM |
| 2 | LTM |
| … | LTM |

| CSI-ReportConfigId | Usage |
| --- | --- |
| 0 | LTM |
| 1 | LTM |
| 2 | Legacy |
| ... | ... |

FIG.9

FIG.10A

| CSI-ReportConfigId | Usage: for legacy |
|---|---|
| 1 | |
| 2 | |
| 3 | |
| ... | |

MAPPING

FIG.10B

| LTM-CSI-ReportConfigId | Usage: for LTM |
|---|---|
| 1 | LTM |
| 2 | LTM |
| ... | ... |

30
CORE
NETWORK
1
C1
12a
11
12c
C2
C2
BACKHAUL
LINK
C2
20
12b

FIG.11

10
BASE STATION
120
TRANSMITTING/RECEIVING SECTION
121
BASEBAND SECTION
1211
TRANSMISSION PROCESSING SECTION
1212
RECEPTION PROCESSING SECTION
122
RF SECTION
123
MEASUREMENT SECTION
130
130
110
CONTROL SECTION
140
TRANSMISSION LINE INTERFACE
CORE NETWORK30/
OTHER BASE STATION10

FIG.12

20
USER TERMINAL
220
TRANSMITTING/RECEIVING SECTION
230
230
222
RF SECTION
223
MEASUREMENT SECTION
221
BASEBAND SECTION
2211
TRANSMISSION PROCESSING SECTION
2212
RECEPTION PROCESSING SECTION
210
CONTROL SECTION

FIG.13

BASE STATION 10, USER TERMINAL 20
1001
PROCESSOR
1007
1004
COMMUNICATION APPARATUS
1002
MEMORY
1005
INPUT APPARATUS
1003
STORAGE
1006
OUTPUT APPARATUS

FIG.14

40
41 DRIVE SECTION
42
43
44
45
46
47
48
49 ELECTRONIC CONTROL SECTION
50
51 ROTATIONAL SPEED SENSOR
52
53 VEHICLE SPEED SENSOR
54 ACCELERATION SENSOR
55
56
57
58
59 INFORMATION SERVICE SECTION
60 COMMUNICATION MODULE
61 MICRO-PROCESSOR
62 MEMORY
63 COMMUNICATION PORT
64 DRIVER-ASSISTANCE-SYSTEM SECTION

FIG.15

**INTERNATIONAL SEARCH REPORT**

International application No. **PCT/JP2024/035523**

**A. CLASSIFICATION OF SUBJECT MATTER**

***H04W 24/10***(2009.01)i; ***H04W 36/18***(2009.01)i; ***H04W 72/23***(2023.01)i
FI: H04W24/10; H04W72/23; H04W36/18

According to International Patent Classification (IPC) or to both national classification and IPC

**B. FIELDS SEARCHED**

Minimum documentation searched (classification system followed by classification symbols)

H04W24/10; H04W36/18; H04W72/23

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | NOKIA. NOKIA SHANGHAI BELL. Remaining Issues on Layer-1 Enhancements for L1/L2-triggered Mobility [online]. 3GPP TSG RAN WG1 #114-bis R1-2309733. [retrieved on 06 December 2024]. internet <URL: https://www.3gpp.org/ftp/tsg_ran/WG1_RL1/TSGR1_114b/Docs/R1-2309733.zip>. 29 September 2023<br>chapter 1, section 2.2.1 | 1, 5, 6<br>2-4 |
| Y | 3rd Generation Partnership Project; Technical Specification Group Radio Access Network; NR; Physical layer procedures for data (Release 18) [online]. 3GPP TS 38.214 V18.0.0 (September 2023). Technical Specification. [retrieved on 06 December 2024]. internet <URL: https://www.3gpp.org/ftp/Specs/archive/38_series/38.214/38214-i00.zip>. 28 September 2023, pp. 1-10, 71-84, 161-162, 270-278<br>sections 5.2.1.1, 5.2.5 | 2-4 |

☑ Further documents are listed in the continuation of Box C. ☐ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 December 2024** | **17 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
PCT/JP2024/035523

C. DOCUMENTS CONSIDERED TO BE RELEVANT

| Category* | Citation of document, with indication, where appropriate, of the relevant passages | Relevant to claim No. |
|---|---|---|
| A | VIVO. Discussion on L1 enhancements for L1/L2-triggered mobility [online]. 3GPP TSG RAN WG1 #114bis R1-2309083. [retrieved on 06 December 2024]. internet <URL: https://www.3gpp.org/ftp/tsg_ran/WG1_RL1/TSGR1_114b/Docs/R1-2309083.zip>. 28 September 2023<br>chapter 1, section 2.3 | 1-6 |
| A | FUJITSU. Remaining issues on L1 enhancements for inter-cell beam management [online]. 3GPP TSG RAN WG1 Meeting #114bis R1-2309649. [retrieved on 06 December 2024]. internet <URL: https://www.3gpp.org/ftp/tsg_ran/WG1_RL1/TSGR1_114b/Docs/R1-2309649.zip>. 29 September 2023, pp. 1-7<br>chapter 1, section 2.1 | 1-6 |

Form PCT/ISA/210 (second sheet) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2023174978 A


### Non-patent literature cited in the description


- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0*, April 2010